# EUROPÄISCHE PATENTSCHRIFT

(11) **EP 2 588 999 B1**
(45) Veröffentlichungstag und Bekanntmachung des Hinweises auf die Patenterteilung: **14.09.2016**
(21) Anmeldenummer: 11727200.5
(22) Anmeldetag: 24.06.2011
(51) Int. Cl.: G06K 19/077, G06K 19/02, D03D 15/00, H01Q 1/22, H01Q 1/27, H01Q 1/36

(54) **BEFESTIGUNGSVERFAHREN**
FASTENING METHOD
PROCÉDÉ DE FIXATION

(30) Priorität: 01.07.2010 DE 102010017684
(43) Veröffentlichungstag der Anmeldung: 08.05.2013
(73) Patentinhaber: Kirnbauer, Johann, 41469 Neuss (DE)
(72) Erfinder: Kirnbauer, Johann, 41469 Neuss (DE)
(74) Vertreter: Jöstingmeier, Martin
(86) Internationale Anmeldenummer: PCT/EP2011/060657
(87) Internationale Veröffentlichungsnummer: WO 2012/000910

(56) Entgegenhaltungen:
- EP-A2- 1 965 461
- DE-A1-102004 003 461
- US-A1- 2008 155 822

## Beschreibung

Sende- und/oder Empfangsschaltkreis, Steuerbaustein und Speicher werden heute in großer Stückzahl hergestellt und als integrierte Schaltkreise in Form sogenannter RFID-Chips mit einer Grundfläche von etwa (0,4mm)² angeboten. Diese RFID-Chips lassen sich somit nahezu überall anbringen. Die RFID-Chips haben meist zwei Kontaktflächen zum Anschluss einer Antenne. Ein RFID-Chip und eine daran angeschlossene Antenne bilden einen RFID-Transponder. Das größte Bauteil eines RFID-Transponders (abgesehen vom Gehäuse) ist in der Regel seine Antenne, welche wegen der in Europa für diese Technik freigegebenen Frequenzen von 868 MHz bis 870 MHz eine typische Größe von 0,5 -4cm aufweisen. Oft sind die Antennen Spulen mit entsprechendem Durchmesser und z.B. in Chipkarten integriert.

Es gibt zahlreiche Versuche Antennen für RFID-Transponder als Gewebe herzustellen. Eine solche Antenne aus einem flexiblen Gewebe böte die Möglichkeit der unauffälligen Integration von RFID-Transpondern in Stoffartikel, wie z.B. Bekleidung, beispielsweise um einen Diebstahlschutz zu realisieren oder auch um Kleidungsstücke automatisch nach ihren Waschanleitungen sortieren zu können.

Bisher hat man zur Herstellung solcher Antennen einen elektrisch leitfähigen Antennenfaden als Schußfaden in ein Gewebe eingewebt, wie es in der DE 10 2006 011596 beschrieben ist. Problematisch ist die dauerhafte Kontaktierung der RFID-Chips mit dem Antennenfaden. Reine Heißklebeverbindungen, wie sie z.B. in der DE 11 2007 001411 A1 vorgeschlagen werden, haben den Nachteil, dass sie degradieren, wenn Sie als Teil einer Textile gewaschen werden. Der Widerstand am Übergangskontakt zwischen dem Antennenfaden und den Kontaktflächen des Chips nimmt durch Waschvorgänge stetig zu, bis der RFID-Transponder ausfällt. Als Verbesserung wurde vorgeschlagen dem Heißkleber Lotpartikel beizumengen um beim Aufkleben der Chips gleichzeitig eine Lötverbindung zwischen Kontaktflächen des RFID-Chips und dem Antennenfaden herzustellen.

### RFID Antenne

### Technisches Gebiet

Die Erfindung betrifft ein Verfahren zum Befestigen einer RFID-Chips an einer Antenne aus einem Gewebeband.

### Stand der Technik

RFID steht für Radio Frequency Identification, zur deutsch "Erkennung mittels Radiowellen". Dazu werden zu erkennende Objekte oder Personen mit RFID-Transpondern ausgerüstet. Das sind Schaltungen, die eine Antenne, einen analogen Sende- und Empfangsschaltkreis und einen digitalem Steuerbaustein nebst Speicher aufweisen. Über den Sende- und Empfangsschaltkreis und die Antenne kann der Steuerbaustein mit RFID-Lese- und/oder Schreibgeräten über Funk kommunizieren. Beispielsweise kann ein Lese- und/oder Schreibgerät Daten wie z.B. eine Identifikationsnummer aus dem Speicher abfragen oder Daten wie z.B. eine Vorgangsnummer an den RFID-Transponder übermitteln.

Besonders weit verbreitet sind passive RFID-Transponder, die Ihre Versorgungsspannung aus dem elektromagnetischen Wechselfeld eines Lese- und/oder Schreibgerätes beziehen. Durch das Wechselfeld wird in der Antenne eine Spannung induziert über die der RFID-Transponder versorgt wird. Zur Übermittlung von Signalen von dem Transponder wird die Last an der Antenne verändert, was durch das Lese- und Empfangsgerät detektiert und ausgewertet wird.

US 2008/155822 A1 beschreibt ein Verfahren zum Montieren eines Transponder-Chips auf einem Substrat. Dazu ist an oder in dem Substrat eine Halterung für den RFID-Chip vorgesehen. Die Halterung hat eine Ausnehmung, in die der Chip eingesetzt wird. Anschlussdrähte für eine Antennenspule werden zunächst in Führungsnuten der Halterung gelegt und dann mit dem Chip verbunden. Zum Einsetzen des RFID-Chips in die Halterung und zur vorübergehenden Positionierung wird ein sogenanntes "pick & place system" verwendet.

In der DE 10 2004 003461 A1 wird vorgeschlagen, eine Antenne auf den UHF- oder Mikrowellenbereich abzustimmen und mittels einer Krimpverbindung mit einem RFID-Chip zu verbinden. Die Antenne ist als leitfähiges Material in ein übliches textiles Gewebe eingearbeitet. Alternativ zur Krimpverbindung kann die Befestigung und Kontaktierung mittels einer leitfähigen Klebepaste, durch Schweißen oder Löten erfolgen.

In der DE 101 55 935 wird vorgeschlagen eine Leiteranordnung in ein textiles Gewebe zu integrieren in dem man einige leitende Kett- und Schußfäden mit Isoliermantel in das Gewebe einwebt. An den Kreuzungspunkten der Kett- und Schußfäden werden diese entsprechend der gewünschten Leiteranordnung miteinander kontaktiert, z.B. indem der Isoliermantel an den Kreuzungspunkten zerquetscht wird. Alternativ wird auch ein Verlöten von Kreuzungspunkten vorgeschlagen.

DE 10 2007 008 316 A1 und die deren Priorität beanspruchende EP 1 965 461 A1 zeigen eine Antenne für einen RF-ID Transponder, die durch Schmalbandweben hergestellt wird. Um ein Ausfransen des Bandes oder Abschnittes davon zu verhindern werden die Kanten verschweißt. Anspruch 1 ist gegenüber diesem Dokument abgegrenzt.

DE 10 2004 005 017 A1 zeigt in Fig. 1 ein Halbzeug für eine Antenne eines RF-ID Transponders. Dieses Halbzeug wird als "Textilrohware" bezeichnet, aus dem

Antennen zugeschnitten werden können. Die Textilrohware hat in Längsrichtung verlaufende elektrisch leitfähige Fäden, wobei jeder Faden leitfähige Abschnitte hat. Die Länge der Abschnitt beträgt jeweils λ/4 der Wellenlänge des zu detektierenden RF-Signals. RFID-Chips werden durch Krimpverbindungen mit den leitfähigen Abschnitten verbunden.

DE 10 2004 001 661 A1 beschreibt eine textile RFID-Antenne. In dem textilen Material der Antenne ist zumindest ein flexibler draht- und/oder fadenartiger elektrischer Leiter angeordnet. Relativ zu diesem elektrischen Leiter wird ein RF-ID Chip positioniert, so dass seine Anschlusspads den elektrischen Leiter kontaktieren. In dieser Position wird der RFID-Chip auf der textilen Antenne fixiert, wobei der Kontakt erhalten bleibt

EP 2 043 027 A1 beschreibt eine Antenne für einen RFID-Transponder aus einem Gewebe. In das Gewebe sind leitende Schuss- und Kettfäden eingearbeitet, so dass sich kastenförmige "Windungen" ergeben. Ein RFID-Chip wird durch Löten oder durch einen leitfähigen Klebstoff mit den entsprechenden Anschlussstellen der "Windungen" verbunden und anschließend vergossen.

### Darstellung der Erfindung

Der Erfindung liegt die Beobachtung zugrunde, dass die Kontaktierung von RFID-Chips mit leitenden Textilien nach wie vor aufwendig ist. Zudem sind die bekannten Gewebe für eine Massenfertigung ungeeignet, weil die Länge der Antennen-Halbzeuge auf die Breite der Webstühle begrenzt ist.

Der Erfindung liegt die Aufgabe zugrunde, ein für eine Massenfertigung geeignetes Verfahren zur Herstellung gewebter Antennen für RFID-Transponder bereitzustellen.

Diese Aufgabe wird durch ein Verfahren des unabhängigen Anspruchs 1 gelöst. Vorteilhafte Ausgestaltungen der Erfindung sind in den Unteransprüchen angegeben.

Um mindestens einen RFID-Chip an einer Antenne aus einem Gewebeband mit mindestens einem leitenden Kettfaden und/oder mindestens einem leitenden Schußfaden zu verbinden wird zunächst der RFID-Chip auf einer Seite des Gewebebands positioniert. An der entsprechenden Position wird der RFID-Chip dann vorübergehend fixiert, wozu ein Unterdruck auf der anderen Seite des Gewebebandes erzeugt wird. Nun wird der RFID-Chip dauerhaft fixiert, dies wird auch als anheften an seiner Position, also auf der einen Seite des Gewebebandes, bezeichnet. Das Anheften kann insbesondere durch einen Klebstoff und/oder eine Vergussmasse und/oder eine Klammer erfolgen. Weil der RFID-Chip beim Anheften zumindest zunächst durch den Unterdruck an seiner Position fixiert ist, kann dass Positionierungswerkzeug weggefahren werden zum einen um Platz für ein Anheftwerkzeug zu schaffen und zum anderen, damit es im Falle einer Verklebung nicht mit dem Klebstoff in Kontakt kommt.

Zur Herstellung mindestens einer Antenne für einen RFID-Transponder wird zunächst ein bandförmiges Gewebe, ein sogenanntes Gewebeband gewebt. Dazu werden bevorzugt zumindest zwei nebeneinander angeordnete leitende Kettfäden mit mindestens einem nichtleitenden thermoplastischen Schußfaden verwebt. Anschließend werden mindestens einige Kettfäden durchtrennt, so dass mindestens zwei Gewebeabschnitte entstehen. Der Schußfaden wird bevorzugt in mindestens einem Endbereich der Kettfäden erwärmt, so dass er auf dem Endbereich des Gewebeschnittes fixiert wird. Der Endbereich der Kettfäden ist der Bereich, der an die Stelle an der die Kettfäden durchtrennt wurden angrenzt.

Durch das Verfahren nach der Erfindung lassen sich Bänder mit nahezu beliebiger Länge weben, die in Längsrichtung leiten. Dadurch wird eine kontinuierliche Herstellung von Gewebeabschnitten ermöglicht, die als Antennen für RFID-Transponder geeignet sind.

Die Längsrichtung ist die Richtung in der die Kettfäden liegen. Entsprechend ist die Querrichtung die Richtung in der der Schußfaden geschossen wird bzw. wurde. Bevorzugt werden von dem Gewebeband Gewebeabschnitte abgetrennt, wobei zumindest einige der Kettfäden der Gewebebänder durchtrennt werden. Bevorzugt wird dabei zumindest der Schußfaden im Endbereich der Gewebeabschnitte erwärmt, wobei der Schußfaden im Endbereich des Gewebeabschnittes schmilzt und nach dem Abkühlen dort fixiert ist, so dass der Gewebeabschnitt nicht ausfranst. Besonders bevorzugt wird zumindest der Abschnitt des Schussfadens, der unmittelbar am Endbereich des Gewebeabschnitts zwischen den Kettfäden liegt mit dem daran angrenzenden Abschnitt des Schussfadens verschweißt. Mann könnte auch sagen, dass der Abschnitt des Schussfadens der den letzten Schuß vor dem Ende des Gewebeabschnittes bildet mit dem Abschnitt des vorletzten Schusses verschweißt wird. Schneiden und verschweißen bilden somit bevorzugt einen einzigen Arbeitsschritt.

Natürlich kann das Gewebeband nicht nur in Querrichtung, sondern auch in Längsrichtung geschnitten werden. Auch diese Schnittkanten können durch erwärmen des Schußfadens im Bereich der Schnittkanten gegen ausfransen gesichert werden. Bevorzugt ist dem Bereich, in dem ein Längsschnitt vorgesehen ist, ein Streifen aus einer Anzahl thermoplastischer Kettfäden, so dass beim Längsschnitt der Streifen in Längsrichtung geteilt wird. Wird nun mindestens eine der beiden Schnittkanten erwärmt, dann verschmelzen die Kettfäden (sofern thermoplastisch) und die Schußfäden im Bereich der Schnittkante(n), wodurch ein Ausfransen der Schnittkante(n) besonders zuverlässig vermieden wird. Alternativ können die Kett- und Schussfäden in dem Bereich in dem ein Längsschnitt erfolgen soll auch erst erwärmt werden, so dass die Kett-und Schußfäden miteinander verschmelzen bzw. verschweißen. Anschließend kann dann der Längsschnitt ausgeführt werden ohne dass die Gefahr eines Ausfransen der Schnittkanten besteht. Bevorzugt erfolgen die Schritte Scheiden bzw. Durchtrennen und Erwärmen in einem Arbeitsschritt.

Besonders bevorzugt hat das Gewebeband bzw. ein Gewebeabschnitt mindestens eine Gruppe aus nebeneinander angeordneten leitende Kettfäden, neben der mindestens ein thermoplastischer Kettfaden angeordnet ist. Beispielsweise kann eine Gruppe nebeneinander angeordneter leitender Kettfäden zwischen zwei Gruppen thermoplastischer Kettfäden angeordnet sein. Eine Gruppe umfasst wenigstens zwei Kettfäden. Die Gruppen bilden somit zueinander parallele leitende bzw. thermoplastische Streifen. Wenn die thermoplastischen Kettfäden isolierend sind, werden zwei oder mehr Streifen aus leitenden Kettfäden durchzwischen ihnen angeordnete Streifen aus nichtleitenden thermoplastischen Kettfäden gegeneinander isoliert. Zudem können im Bereich der thermoplastischen Längsstreifen Längsschnitte erfolgen, deren Schnittkanten sich durch Erwärmen der thermoplastischen Kett- und/oder Schußfäden wie schon beschrieben gegen Ausfransen sichern lassen.

Als leitender Faden wird bevorzugt nichtisolierter Leiter, z.B. ein blanker Metalldraht, bevorzugt aus Edelstahl und als nichtleidender Faden z.B. ein Kunstseidenfaden verwendet.

Zumindest die leitenden Kettfäden haben bevorzugt einen Durchmesser, der kleiner ist als der Durchmesser der die Kettfäden kontaktierenden Kontaktfläche eines auf den Gewebeabschnitt aufgesetzten RFID-Chips. Dadurch kann der RFID-Chip derart auf den Gewebeabschnitt aufgesetzt werden, dass die Kontaktfläche mit mindestens zwei leitenden Kettfäden kontaktiert. Bevorzugt ist der Durchmesser der Kettfäden kleiner als etwa 1/10 des Durchmessers der Kontaktfläche des RFID-Chips, so dass die Kontaktfläche des RFID-Chips mindestens etwa 10 leitende Kettfäden kontaktiert. Als besonders geeignet hat sich ein Metalldraht mit einem Durchmesser von etwa 0,04mm oder kleiner gezeigt. Wenn eine Kontaktfläche eines RFID-Chips mehrere Kettfäden kontaktiert, dann bleibt der Ausfall einzelner Kettfäden, z.B. durch Fadenbruch, ohne spürbare Auswirkung auf den RFID-Transponder. Ein kontaktieren im klassischen Sinne (Ohmscher Widerstand sehr klein) ist nicht mal zwingend erforderlich. Es genügt den Abstand zwischen den Kontaktflächen des RFID-Chips und den leitenden Fäden klein zu halten, so dass diese kapazitiv mit einander verkoppelt sind.

Der Durchmesser des Schußfadens bzw. der Schußfäden ist bevorzugt kleiner gleich dem Durchmesser des Metalldrahts ist, also ebenfalls 0,04mm oder kleiner. Die Schußfäden befinden sich bei aufgesetztem Chip zwischen den leitenden Kettfäden und den Kontaktflächen des Chips. Bei diesem geringen Durchmesser des Schußfaden genügt die Kapazitive Kopplung zwischen den leitenden Kettfäden und den Kontaktflächen des RFID-Chips um ein ausreichendes Antennensignal an den Kontaktflächen zu erzeugen. Deshalb werden in einer bevorzugten Ausführungsform Kontaktflächen eines RFID-Chips kapazitiv mit leitenden Kettfäden gekoppelt.

Das Durchtrennen der Kettfäden und das Erwärmen des Schußfadens erfolgt bevorzugt in einem Arbeitsschritt. Das ist sehr effizient und ein Ausfransen der Gewebeabschnitte nach dem Durchtrennen und vor dem Erwärmen wird verhindert.

Beispielsweise kann das Durchtrennen und Erwärmen mit einem beheizten Schneidwerkzeug, z.B. einem beheizten Stanzmesser in einem Arbeitsschritt durchgeführt werden.

Auch Laserschneiden kann zum Durchtrennen der Kettfäden verwendet werden. Auch dabei wird der Schußfaden automatisch erwärmt.

Zum Herstellen eines RFID-Transponders genügt es einen RFID-Chip mit seinen Kontaktflächen zum Anschluss einer Antenne auf das Gewebe bzw. einen Gewebeabschnitt aufzulegen. Es bedarf nicht einmal einer Fixierung durch Kleben oder Löten, um einen ausreichenden Kontakt zwischen den Kontaktflächen und den leitenden Kettfäden herzustellen.

Bevorzugt wird der RFID-Chip auf einen Gewebeabschnitt aufgelegt und mit dem Gewebeabschnitt in eine Tasche eines Stoffes derart eingenäht, dass er gegen ein Abheben von dem Gewebeabschnitt gesichert ist. Diese Methode ist besonders geeignet für regelmäßig zu waschende Textilien, weil kein Klebstoff verwendet wird, der durch die Waschvorgänge in seiner Funktion beeinträchtigt würde.

Alternativ oder zusätzlich kann der RFID-Chip auf einer Seite eines Gewebeabschnitts positioniert und mit einer Vergußmasse dort fixiert werden. Damit der RFID-Chip beim Aufbringen oder Aushärten der Vergußmasse, z.B. einem Lack, nicht verrutscht, wird bevorzugt auf der anderen Seite des Gewebeabschnitts zumindest unterhalb des Chips ein Unterdruck erzeugt, um den Chip auf dem Gewebeabschnitt zu anzusaugen und somit vorrübergehend zu fixieren. Nach dem die Vergußmasse zumindest zum Teil ausgehärtet ist, kann der Unterdruck entfernt werden.

Bevorzugt weist das Gewebeband mindestens zwei Gruppen von leitenden Kettfäden auf, zwischen denen ein isolierender Streifen aus einer Anzahl nichtleitender Kettfäden ist. Dies ermöglich es aus dem Gewebe Antennen mit verbesserten Empfangseigenschaften herzustellen. Solche Antennen weisen beispielsweise einen Gewebeabschnitt mit einem ersten Schenkel aus der ersten Gruppe leitender Kettfäden auf. Seitlich versetzt, durch einen Streifen mit isolierende Kettfäden von diesem isoliert und durch isolierende Schussfäden daran fixiert, hat der Gewebeabschnitt einen zweiten leitenden Schenkel der die zweiten Gruppe leitender Kettfäden aufweist. Der RFID-Chip wird nun mit mindestens einer erstenKontaktfläche auf den ersten leitenden Schenkel aufgesetzt und mit mindestens einer zweiten Kontaktfläche auf den zweiten leitenden Schenkel aufgesetzt. Bevorzugt weisen die beiden freien Enden der beiden Schenkel in einander entgegengesetzte Richtungen, dann ist der Gewebeabschnitt in der Aufsicht annähernd "S-förmig".

Bevorzugt werden etwa 25 bis etwa 150 Kettfäden nebeneinander zu einer Gruppe leitender Kettfäden nebeneinander angeordnet. Bevorzugt ist in einem Gewebeband zwischen zwei Gruppen leitender Kettfäden ein isolierender Streifen aus einer Anzahl nichtleitender bevorzugt thermoplastischer Kettfäden. Die Anzahl der nichtleitenden Kettfäden und damit die Breite des isolierenden Streifens ist so zu bemessen, dass die beiden Gruppen leitender Kettfäden im späteren Gewebeband voneinander isoliert sind, zumindest solange das fertige Gewebeband nicht auf sich selbst umgeschlagen wird. Zudem sollte die Breite des isolierenden Streifen in etwa dem Abstand der Kontaktflächen eines RFID-Chips entsprechen. Bevorzugt ist die Breite des isolierenden Streifens etwas (etwa 11 bis 50%) kleiner als der Abstand der Kontaktflächen, damit die Kontaktflächen möglichst mit ihrer vollen Breite auf den leitenden Kettfäden aufliegen und mit möglichst vielen leitenden Kettfäden kontaktieren.

Bevorzugt ist mindestens ein z.B. ein nichtleitender Kettfaden beispielsweise optisch von den anderen Kettfäden unterscheidbar. Beispielsweise kann er fluoreszierend sein oder farbig von den anderen Kettfäden unterscheidbar sein. Dann kann dieser unterscheidbare Kettfaden als Markierung zum Positionieren von RFID-Chips in zumindest in Querrichtung dienen. Beim Positionieren eines RFID-Chips wird zunächst dieser unterscheidbare Kettfaden lokalisiert, z.B. mit einem optischen Sensor. Anschließend kann der RFID-Chip relativ zu dem unterscheidbaren Kettfaden positioniert werden, z.B. so dass seine Kontaktflächen auf zwei unterschiedlichen Gruppen leitender Kettfäden aufgesetzt werden und der dazwischen befindliche Teil des RFID-Chips einen isolierenden Streifen mit nichtleitenden Kettfäden überbrückt.

Ein Schneidwerkzeug zur Herstellung von zuvor beschriebenen Gewebeabschnitten aus einem ebenfalls zuvor beschriebenen Gewebeband ist geeignet zum Durchtrennen von Kett- und/oder Schussfäden eines Gewebes und zum Erwärmen von thermoplastischen Kett- und/oder Schussfäden. Es hat mindestens eine Schneidkante zum Durchtrennen von Kett- und/oder Schussfäden. Zudem sind an dem Schneidwerkzeug Heizmittel derart angeordnet, dass beim oder unmittelbar nach dem Durchtrennen der Kett- und/oder Schussfäden zumindest ein Faden des Gewebes erwärmt wird. Bevorzugt ist an dem Schneidwerkzeug eine Heizleiste angeordnet, die beim oder nach dem Durchtrennen eines oder mehrerer Kett- und/oder Schussfäden in den Bereich mindestens einer der Schnittkanten angeordnet wird, um im Bereich Schnittkante thermoplastische Fäden zu erwärmen, so dass sie an einander oder an anderen Fäden anhaften.

Bevorzugt wird nach dem Erwärmen mindestens eines thermoplastischen Fadens dieser gegen andere Fäden oder sich selbst gedrückt, um das anhaften zu unterstützen

In einer Ausführungsform hat das Schneidwerkzeug eine Führung, z.B. in Form eines Vorschubtisches, und eine erste Schneidkante. Durch die Führung wird das Gewebeband über die erste Schneidkante geführt. Beispielsweise kann das Gewebeband zu der ersten Schneidkante vorgeschoben werden. Zudem hat das Schneidwerkzeug eine zweite Schneidkante, die relativ zu der ersten Schneidkante verschiebbar ist, um im Zusammenwirken mit der ersten Schneidkante mindestens einen Schnitt in das Gewebeband einzubringen, z.B. einen Gewebeabschnitt von dem Gewebeband abzutrennen. Im Bereich der ersten und/oder der zweiten Schneidkante ist je eine Heizleiste angeordnet, von denen mindestens eine beim Schneiden in Richtung des Gewebebandes bewegt wird, so dass thermoplastische Kett- und/oder Schussfäden zumindest im Bereich der Schnittkante aufschmelzen und diese somit gegen Ausfransen gesichert wird.

Aus einem Gewebeband mit leitenden Kettfäden lassen sich auch ringförmige, z.B. Kreisring oder "racetrack"-artige Gewebeabschnitte abtrennen. Auf solch einen ringförmigen Gewebeabschnitt kann ein RFID-Chip derart aufgelegt werden, dass sein Kontaktflächen auf den ringförmigen Gewebeabschnitt aufgesetzt werden und diesen kontaktieren oder zumindest kapazitiv an leitende Kettfäden ankoppeln. Solche ringförmigen Gewebeabschnitte lassen sich einfach, z.B. durch Ausstanzen aus einem Gewebeband fertigen und bieten gute Antenneneigenschaften.

Beim Weben des Gewebes werden der Schußfaden und Kettfäden bevorzugt derart zueinander bewegt, dass bei einem Schuss der Schussfaden vor und nach einem ersten Kettfaden die Seite wechselt, um dann frühestens nach dem übernächsten Kettfaden wieder die Seite zu wechseln, wobei der dann folgende Kettfaden wie der erste Kettfaden eingewebt wird. Der Kettfaden, welcher erster Kettfaden ist, ändert sich von Schuss zu Schuss. Dadurch entsteht ein Muster, bei dem die Kettfäden auf eine Seite für eine Länge die der Breite von zwei Schußfäden entspricht frei liegen und besonders gut kontaktiert werden können. Auch die kapazitive Kopplung zwischen Kontaktflächen eines RFID-Chips und leitenden Kettfäden wird verbessert.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Figur 1 zeigt ein Gewebe mit leitenden Kettfäden im Querschnitt,
Figur 2 zeigte Ansicht eines Gewebes,
Figur 3 zeigt einen Antennenabschnitt,
Figur 4 zeigt den Antennenabschnitt aus Figur 4 mit einem RFID-Chip,
Figur 5 zeigt eine weiteren Antennenabschnitt,
Figur 6 zeigt ein Ersatzschaltbild, und
Figur 7 zeigt ein weiteres Gewebe im Querschnitt.

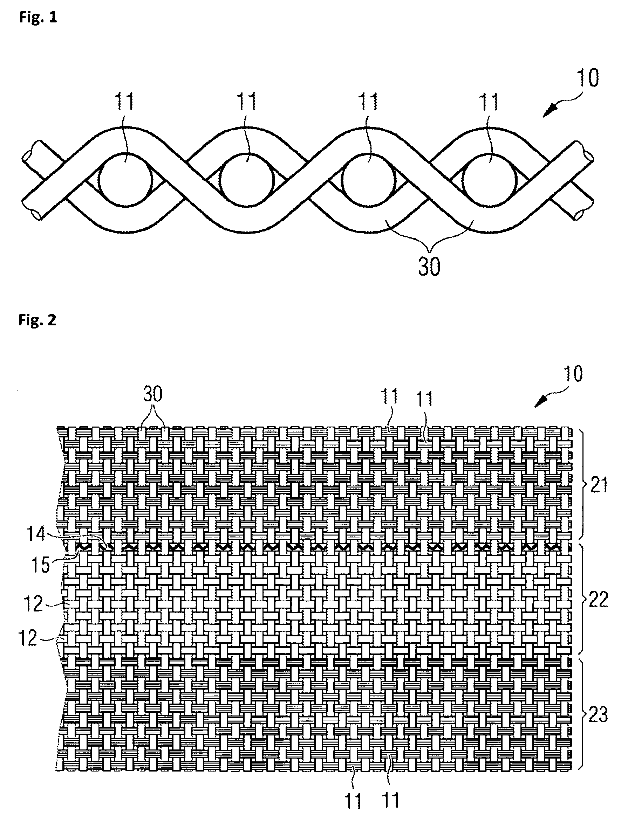

Figur 1 zeigt einen Ausschnitt eines Gewebebandes 10 im Querschnitt. Das Gewebeband 10 hat leitende Kettfäden 11 aus einem metallischen Draht, bevorzugt aus Edelstahl, mit einem Durchmesser von etwa 0,0375 mm, die mit einem Schußfaden 30 miteinander verwoben sind. Der Schußfaden 30 hat etwa den halben Durchmesser wie die Kettfäden und ist aus einem thermoplastischen und nichtleitenden Material. Der Durchmesser des Schussfadens 30 sollte kleiner gleich dem Durchmesser der Kettfäden 11 sein, damit die Kettfäden möglichst gut kontaktiert werden können. Selbst wenn ein Kontakt der leitenden Kettfäden Kontaktflächen eines auf das Gewebeband 10 aufgesetzten RFID-Chips durch einen Schußfaden verhindert wird, ist es vorteilhaft wenn der Schussfaden möglichst dünn ist, weil dann der bzw. die Kettfäden 11 mit den Kontaktflächen kapazitiv verkoppeln. Diese kapazitive Kopplung kann den elektrischen Kontakt ersetzen.

Figur 2 zeigt einen Ausschnitt eines Gewebebandes 10 mit leitenden Kettfäden 11 z.B. aus Edelstahldraht, und isolierendem Schußfaden 30 aus thermoplastischem Material. Die leitenden Kettfäden 11 sind lediglich zur besseren Unterscheidbarkeit längsgestreift dargestellt und in Gruppen nebeneinander angeordnet. Jede Gruppe aus leitenden Kettfäden 11 bildet somit einen in Längsrichtung leitenden Streifen 21, 23. Jeder leitende Streifen 21, 23 hat bevorzugt mindestens 10 leitende Kettfäden. Zwischen den leitenden Streifen 21, 23 hat das Gewebeband 10 isolierende Kettfäden 12, die bevorzugt aus einem thermoplastischen Material gefertigt sind und isolierende Streifen 22 bilden. Mindestens ein Kettfaden 15 trägt eine Markierung 14, anhand der er von anderen Kettfäden 11, 12 unterscheidbar ist. Die Markierung 14 kann insbesondere eine optische wahrnehmbare Markierung sein, beispielsweise kann sich der unterscheidbare Kettfaden 15 farblich von den anderen Kettfäden 11, 12 abheben. Im gezeigten Beispiel ist der unterscheidbare Kettfaden aus einem isolierenden und thermoplastischen Material. Es können aber auch Materialen mit anderen Eigenschaften verwendet werden. Soll ein RFID-Chip auf das Gewebeband oder einen Abschnitt davon aufgesetzt werden, dann kann der RFID-Chip an dem unterscheidbaren Kettfaden 15 in zumindest Querrichtung ausgerichtet werden. Dadurch kann sichergestellt werden, dass der RFID-Chip mit seinen Kontaktflächen auf den leitenden Streifen 21, 23 aufliegt. Wenn der unterscheidbare Kettfaden 15 in Längsrichtung Markierungen aufweist, dann kann der RFID-Chip auch in Längsrichtung an dem unterscheidbaren Kettfaden 15 bzw. dessen Markierung 14 ausgerichtet werden.

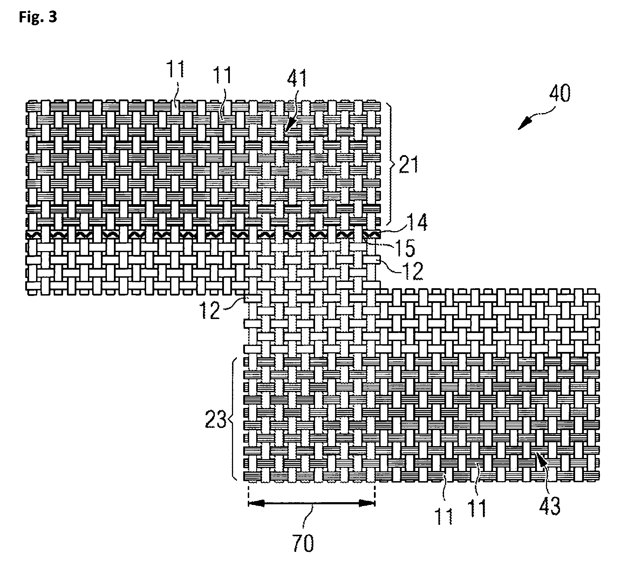

Aus dem Gewebeband in Figur 2 kann ein Antennenabschnitt 40, wie in Figur 3 abgebildet, abgetrennt werden. Damit der Antennenabschnitt 40 an seinen Rändern nicht ausfranst, werden zumindest die thermoplastischen Fäden in dem Randbereich erwärmt, so dass sie aneinander bzw. an den leitenden Kettfäden 11 haften. Das Abtrennen des Antennenabschnittes 40 und das Erwärmen der der Randbereiche erfolgt bevorzugt in einem Arbeitsschritt. Der Antennenabschnitt 40 weist einen ersten leitenden Antennenstreifen 21 und einen weiteren leitenden Antennenstreifen 23 auf. Die leitenden Antennenstreifen 21, 23 sind aus den leitenden Streifens 21 bzw. 23 eines Gewebebandes 1 nach Figur 2 abgetrennt. Entsprechend ist zwischen den beiden leitenden Antennenstreifen ein nichtleitender Antennenstreifen 22. Die leitenden Antennenstreifen 21, 23 sind zueinander parallel und durch den nichtleitenden Antennenstreifen 22 voneinander beabstandet, wobei sie in Längsrichtung in einem Bereich 70 überlappen. Der Schußfaden im Bereich des überlappenden Bereichs 70 hält die leitenden und den nichtleitenden Antennenstreifen 21, 22, 23 zusammen.

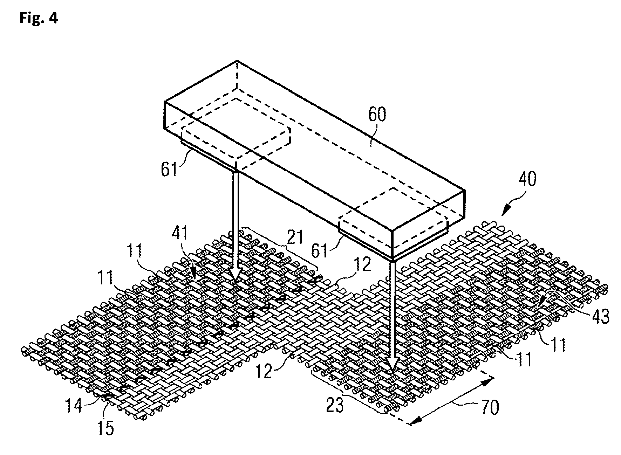

Auf einen Antennenabschnitt 40 nach Figur 3 kann wir in Figur 4 angedeutet ein RFID-Chip 60 aufgesetzt werden. Ein Bestückungsautomat setzt den RFID-Chip 60 auf den Antennenabschnitt 40, wobei er mit einem optischen Sensor den unterscheidbaren Kettfaden 15 lokalisiert und den RFID-Chip 60 zumindest in Querrichtung anhand des unterscheidbaren Kettfadens auf dem Gewebeband aus richtet. Wenn der unterscheidbare Kettfaden 15 in Längsrichtung Markierungen aufweist, kann auch die Ausrichtung in Längsrichtung anhand des unterscheidbaren Kettfadens erfolgen. Der RFID-Chip 60 hat zwei Kontaktflächen 61 zum Anschluß einer Antenne. Er wird derart auf den Antennenabschnitt 40 aufgesetzt, dass eine Kontaktfläche 61 einen leitenden Antennenstreifen 21 und die andere Kontaktfläche 61 einen anderen leitenden Antennenstreifen 23 aufliegt. An der dem RFID-Chip 60 abgewandten Seite des Antennenstreifens 40 bzw. des Gewebebands 10 wird ein Unterdruck erzeugt, um den RFID-Chip 60 vorläufig zu fixieren. Anschließend kann der RFID-Chip 60 z.B. mit einem Kleber dauerhaft auf dem Antennenabschnitt 40 bzw. dem Gewebeband 10 fixiert werden. Durch den Unterdruck wird der RFID-Chip mit seinen Kontaktflächen 61 auf die leitenden Kettfäden 11 gedrückt, wodurch der Kontakt zwischen den Kontaktflächen 61 und den leitenden Kettfäden 11 verbessert wird. Dieser verbesserte Kontakt bleibt auch erhalten, wenn kein Unterdruck mehr erzeugt wird weil dann die Fixierung den RFID-Chip 60 mit seinen Kontaktflächen 61 auf den Antennenabschnitt 40 drückt.

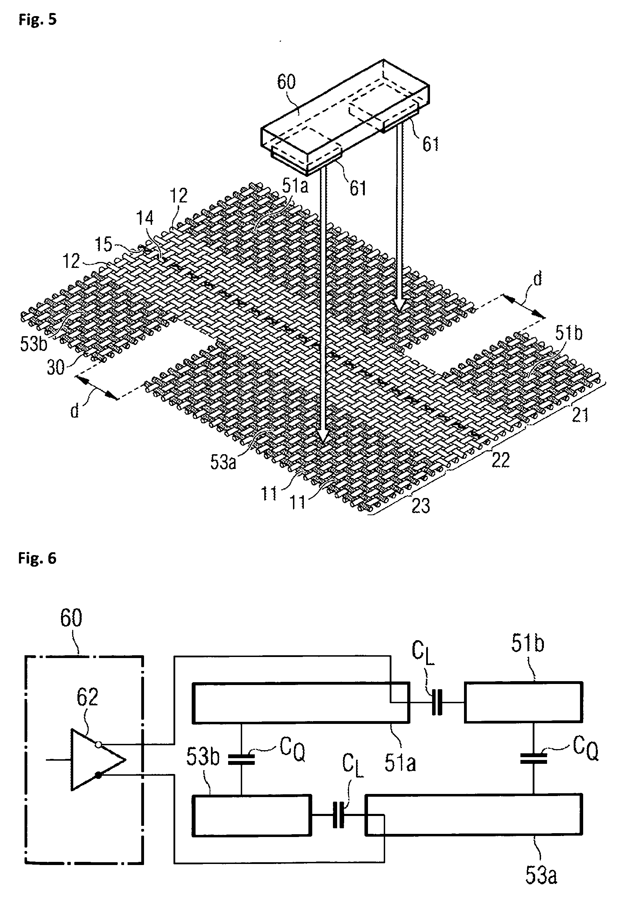

Figur 5 zeigt einen weiteren Antennenabschnitt 50, der ebenso wie anhand des Antennenabschnitts 40 beschrieben aus einem Gewebeband 10 nach Figur 2 abgetrennt werden kann. Im gezeigten Beispiel ist die Position des unterscheidbaren Kettfadens 15 beispielhaft gegen die in Fig. 2 bis Fig. 4 dargestellte Position verschoben. Auf diesen Antennenabschnitt 50 kann wie anhand von Figur 5 beschrieben ein RFID-Chip 60 aufgesetzt werden. Der Antennenabschnitt 50 hat zwei leitende Antennenstreifen 51a, 53a auf die die Kontaktflächen 61 des RFID-Chips 60 aufgesetzt werden. Zudem hat der Antennenabschnitt zwei in der Fortsetzung der Antennenstreifen 51a bzw. 53a angeordnete weitere Antennenstreifen 51b bzw. 53b die lediglich kapazitiv mit den zu ihnen benachbarten parallelen Antennenstreifen 53a bzw. 51a verkoppelt sind. Diese kapazitive Verkopplung verläuft somit in Querrichtung des Gewebebandes 10 bzw. des Antennenabschnitts 50. Die kapazitive Verkopplung zwischen den Antennenstreifen 51a und 51b sowie zwischen den Antennenstreifen 53a und 53b, d.h. die kapazitive Verkopplung zwischen den Antennenstreifen in Längsrichtung sollte so gering als möglich sein, was einfach durch einen entsprechend großen Abstand d zwischen den entsprechenden Antennenstreifen 51a und 51b bzw. 53a und 53b realisiert wird. Ein Ersatzschaltbild der Anordnung in Figur 5 ist in Figur 6 dargestellt. Es bezeichnen C_{Q} die Kapazitäten in Querrichtung und C_{L} Kapazitäten in Längsrichtung. Es sollte C_{L} wesentlich kleiner als C_{Q} sein, d.h. C_{L}≤ 0,25* C_{Q}, bevorzugt C_{L}≤ 0,1* C_{Q}. Mit dem Bezugszeichen 63 wird ein Eingangsverstärker des RFID-Chips 60 bezeichnet. Der Antennenabschnitt 50 hat gegenüber dem Antennenabschnitt 40 aus Figur 3 und Figur 4 den Vorteil, dass die Schnittkanten kürzer sind, weil lediglich die Bereiche mit der Breite d zwischen den Antennenstreifen 51a und 51b sowie zwischen den Antennenstreifen 53a und 53b aus einem Gewebeband 10 wie in Figur 3 gezeigt ausgeschnitten werden müssen. Dadurch ist der Antennenstreifen nicht nur robuster, sondern gleichzeitig wird der Signalpegel am Eingangsverstärker verbessert.

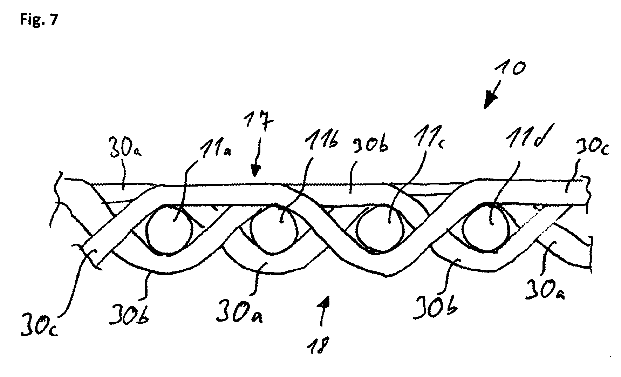

Figur 7 zeigt einen Ausschnitt eines Querschnitts aus einem besonders geeigneten Gewebe 10. Mit den Bezugszeichen 11a bis 11d sind nebeneinander angeordnete leitende Kettfäden bezeichnet. Das besondere an diesem Gewebe 10 ist die Umschlingung der Kettfäden 11a bis 11d durch den Schußfaden 30. Mit den Bezugszeichen 30a bis 30c sind Abschnitte des Schußfadens 30 bezeichnet die in aufeinander folgenden Schüssen gewebt wurden. Das Gewebe 10 zeichnet sich dadurch aus, dass der Schußfaden 30 von einer ersten Seite 17 der Kettfäden um einen ersten Kettfaden herum zurück zur ersten Seite 17 geführt wird, dann auf der ersten Seite 17 an n Kettfäden vorbei zum n+1 Kettfaden, zwischen dem n+1 und dem n+2 Kettfaden auf die andere Seite 18 des Gewebes geführt wird, um zwischen dem n+2 und n+3 Kettfaden zurück auf die erste Seite 17 geführt zu werden. Diese Führung des Schussfadens wiederholt sich, wobei von Schuß zu Schuß der erste Kettfaden der beschriebenen Sequenz um mindestens einen Kettfaden weiter wandert. Zwischen zwei in üblicher Weise eingewebten Kettfäden befinden sich somit n+1 Kettfäden, wobei n eine natürliche Zahl (größer 0, n>0) und bevorzugt kleiner 10 bezeichnet. In Figur 2 zeigt das Beispiel n=1.

Mit Bezug auf den Abschnitt 30a ist der Kettfaden 11b ein erster Kettfaden um den der Schußfaden 30 wie üblich herum geführt wurde. An den Kettfäden 11c (n) und 11d (n+1) liegt der Abschnitt 30 nur an der ersten Seite 17, hier oben dargestellt, an. Zwischen dem Kettfaden 11d (n+1, neuer Start) und dem nicht dargestellten Kettfaden rechts von 11d ist der Abschnitt 30a auf die andere Seite 18, hier die Unterseite, geführt. Im nachfolgend geschossenen Abschnitt 30b ist der Kettfaden 11d der erste Kettfaden, um den der Schußfaden von oben kommend wie üblich herum geführt wurde. An den Kettfäden 11c (n) und 11b (n+1) wird der Kettfaden an der ersten Seite 17 vorbeigeführt um um den Kettfaden 11a (n+2, neuer Start) wie üblich herum geführt zu werden. Der Kettfaden 11a ist somit auch der erste Kettfaden der folgenden Sequenz. Beim Schießen des nächsten Abschnitts 30c ist der erste Kettfaden der Sequenz einen weiter nach links gewandert und hier nicht dargestellt. Um diesen Kettfaden ist der Schußfaden wie üblich herumgeführt. Er bleibt dann an der ersten Seite der Kettfäden 11a (n) und 11b (n+1) und ist dann wieder um den Kettfaden 11d (n+2, neuer Start) herum geführt. Durch diese Schussfadenführung ergibt sich ein Muster, bei dem die Kettfäden auf der anderen, hier unteren, Seite 18 auf einer Länge, die der Breite von zwei Schußfäden entspricht freiliegen. Dadurch kann der Kettfaden in diesem Bereich besonders gut kontaktiert werden bzw. kapazitiv mit einem RFID-Chip verkoppeln. Erhöht man n, wächst auch die Länge in der die Kettfäden freiliegen, gleichzeitig wird das Gewebe aber auch in stabiler. Die Anhand von Figur 7 beschriebene Art zu weben ist besonders geeignet für leitende Gewebestreifen 21, 23, wie sie z.B. in den Figuren 2 bis 5 gezeigt werden. Insbesondere wenn n größer 1 (n>1) ist es sinnvoll den Gewebeabschnitt auf einem Träger, z.B. einer Textile zu befestigen. Nichtleitende Gewebestreifen werden bevorzugt wie in Figur 1 bis 5 gezeigt gewebt.

### Bezugszeichenliste

- 10: Gewebe, Gewebeband
- 11: leitender Kettfaden
- 12: nichtleitender (isolierender) Kettfaden
- 14: Markierung
- 15: unterscheidbarer Kettfaden
- 17: erste Seite, im Beispiel oben
- 18: andere, zweite Seite, im Beispiel unten
- 21: leitender Streifen; leitender Antennenstreifen
- 22: nichtleitender Streifen; nichtleitender Antennenstreifen
- 23: leitender Streifen; leitender Antennenstreifen
- 30: Schußfaden
- 40: Antennenabschnitt
- 50: Antennenabschnitt
- 51a: leitender Antennenstreifen
- 51b: leitender Antennenstreifen
- 53a: leitender Antennenstreifen
- 53b: leitender Antennenstreifen
- 52: nichtleitender Antennenstreifen
- 60: RFID-Chip
- 61: Kontaktfläche
- 70: überlappender Bereich
- C_{L}: Kapazität in Längsrichtung
- C_{Q}: Kapazität in Querrichtung
- d: Abstand

## Patentansprüche

1. Verfahren zum Befestigen mindestens eines RFID-Chips (60) an einer Antenne aus einem Gewebeband (10) mit mindestens einem leitenden Kettfaden und/oder mindestens einem leitenden Schußfaden,
mit den Schritten: Positionieren des RFID-Chips (60) auf einer Seite des Gewebebands (10), durch gekennzeichnet
Erzeugen von Unterdruck auf der anderen Seite des Gewebebandes (10), um den RFID-Chip (60) durch den Unterdruck vorübergehend so zu fixieren dass Kontakte des Chips an den leitenden Faden gecheidet werden, und dauerhaftes Fixieren des RFID-Chips (60).

2. Verfahren nach Anspruch 1, **dadurch gekennzeichnet, dass** zum Herstellen der Antenne zumindest folgende Schritte durchgeführt werden:
- Weben eines Gewebebandes (10) mit zumindest zwei nebeneinander angeordneten leitenden Kettfäden (11) und mindestens einem nichtleitenden thermoplastischen Schußfaden (30),
- Durchtrennen von Kettfäden (11), wodurch mindestens zwei Gewebeabschnitte entstehen,
- Erwärmen des Schußfadens in mindestens einem Endbereich der Kettfäden mindestens eines der Gewebeabschnitte, um den Schußfaden auf dem Endbereich mindestens eines Gewebeabschnittes zu fixieren.

3. Verfahren nach Anspruch 2,
**dadurch gekennzeichnet, dass**
das Durchtrennen der Kettfäden (11) und das Erwärmen des Schußfadens in einem Arbeitsschritt erfolgt.

4. Verfahren nach Anspruch 2 oder 3
**dadurch gekennzeichnet, dass**
zumindest einige der Kettfäden (11) durch ein beheiztes Stanzwerkzeug durchtrennt werden.

5. Verfahren nach Anspruch 2, 3 oder 4,
**dadurch gekennzeichnet, dass**
zumindest einige der Kettfäden (11) durch einen Laser durchtrennt werden.

6. Verfahren nach einem der vorstehenden Ansprüche,
**dadurch gekennzeichnet, dass**
mindestens ein RFID-Chip (60) verschiebbar mit mindestens einer Kontaktfläche (61) auf einen Gewebeabschnitt (10) aufgelegt wird.

7. Verfahren nach einem der vorstehenden Ansprüche,
**dadurch gekennzeichnet, dass**
der Gewebeabschnitt (10) mit dem RFID-Chip (60) in eine Tasche eines Stoffes eingenäht wird.

## Claims

1. Method for fastening at least one RFID chip (60) to an antenna made of a woven fabric strip (10) having at least one conductive warp yarn (11) and/or at least one conductive weft yarn (30),
comprising the steps:
Positioning the RFID chip (60) on one side of the woven fabric strip (10),
**characterized by**
generating a vacuum on the other side of the woven fabric strip (10) to temporarily fix the RFID chip (60) by the vacuum such that contact terminals of the chip are pressed against the conductive yarn, and permanently fixing the RFID chip (60).

2. Method according to claim 1, **characterized in that** for fabricating the antenna, at least one of the following steps is conducted:
- Weaving a fabric strip (10) having at least two adjacent conductive warp yarns (11) and at least one non-conductive thermoplastic weft yarn (30),
- Severing of warp yarns (11), thereby resulting in at least two fabric portions,
- Heating of the weft yarn in at least one end region of the warp yarns of at least one of the fabric portions, in order to fix the weft yarn on the end portion of at least one fabric portion.

3. Method according to claim 2,
**characterized in that**
the severing of the warp yarns (11) and the heating of the weft yarn are conducted in one working step.

4. Method according to claim 2 or 3,
**characterized in that**
at least some of the warp yarns (11) are severed by a heated cutting die.

5. Method according to claim 2, 3 or 4,
**characterized in that**
at least some of the warp yarns (11) are severed by a laser.

6. Method according to one of the preceding claims,
**characterized in that**
at least one RFID chip (60) is slideably placed with at least one contact surface (61) on a fabric section (10).

7. Method according to one of the preceding claims,
**characterized in that**
the fabric portion (10) is sewn in a pocket of a fabric with the RFID chip (60).

## Revendications

1. Procédé pour fixer au moins une puce RFID (60) sur une antenne faite d'une bande de textile (10) avec au moins un fil de chaîne conducteur et/ou avec au moins un fil de trame conducteur, comprenant les étapes suivantes :
positionnement de la puce RFID (60) sur une face de la bande de textile (10),
**caractérisé en ce qu'**une dépression est créée sur l'autre face de la bande de textile (10) afin de fixer temporairement la puce RFID (60) sous l'effet de la dépression de telle manière que des contacts de la puce soient pressés sur le fil conducteur,
et fixation définitive de la puce RFID (60).

2. Procédé selon la revendication 1, **caractérisé en ce que** les étapes suivantes, au moins, sont exécutées pour fabriquer l'antenne :
- tissage d'une bande de textile (10) avec au moins deux fils de chaîne conducteurs (11) disposés l'un à côté de l'autre et au moins un fil de trame thermoplastique non conducteur (30),
- section de fils de chaîne (11) en formant ainsi au moins deux morceaux de textile,
- chauffage du fil de trame dans au moins une partie d'extrémité des fils de chaîne d'au moins un des morceaux de textile afin de fixer le fil de trame sur la partie d'extrémité d'au moins un morceau de textile.

3. Procédé selon la revendication 2, **caractérisé en ce que** la section des fils de chaîne (11) et le chauffage du fil de trame sont effectués dans une même étape de travail.

4. Procédé selon la revendication 2 ou 3, **caractérisé en ce qu'**au moins quelques-uns des fils de chaîne (11) sont sectionnés par un outil de découpe chauffé.

5. Procédé selon la revendication 2, 3 ou 4, **caractérisé en ce qu'**au moins certains des fils de chaîne (11) sont sectionnés par un laser.

6. Procédé selon l'une des revendications précédentes, **caractérisé en ce qu'**au moins une puce RFID (60) est posée de façon déplaçable avec au moins une surface de contact (61) sur une partie de textile (10).

7. Procédé selon l'une des revendications précédentes, **caractérisé en ce que** la partie de textile (10) portant la puce RFID (60) est cousue dans une poche d'une étoffe.
